# EUROPEAN PATENT APPLICATION

(11) **EP 4 588 768 A1**
(43) Date of publication of application: **23.07.2025**
(21) Application number: 23884686.9
(22) Date of filing: 25.10.2023
(51) Int. Cl.: B62K 11/02

(54) **MOTORCYCLE**

(30) Priority: 31.10.2022 CN 202211344946
(71) Applicant: Zhejiang CFMOTO Power Co., Ltd., Hangzhou, Zhejiang 311199 (CN)
(72) Inventor: JI, Weihai, Hangzhou, Zhejiang 311199 (CN); XIONG, Xiaoming, Hangzhou, Zhejiang 311199 (CN); YANG, Neng, Hangzhou, Zhejiang 311199 (CN); CHEN, Yu, Hangzhou, Zhejiang 311199 (CN); CHENG, Jianbang, Hangzhou, Zhejiang 311199 (CN); LI, Songfeng, Hangzhou, Zhejiang 311199 (CN); JIN, Zhaodeng, Hangzhou, Zhejiang 311199 (CN)
(74) Representative: Sun, Yiming
(86) International application number: PCT/CN2023/126468
(87) International publication number: WO 2024/093754

(57) **Abstract**

The application provides a motorcycle. A first reference point is defined as a seating position for the driver, a second reference point is defined as a symmetrical center point of the handlebar along the left-right direction, and a third reference point is defined as a symmetrical center point of the first pedal along the left and right direction. The relative positions between the first reference point, the second reference point, and the third reference point are re-designed, and the fault diagnosis unit of the control system in the motorcycle is disposed below the seat assembly. The angle between the extension direction of the instrument of the instrument assembly in the motorcycle and a horizontal plane is greater than or equal to 0 degree to 60 degrees. Therefore, this can not only overcome the problem of poor comfort for drivers when riding motorcycles, enhance driving comfort, but also keep the fault diagnosis unit away from the high-temperature areas of motorcycles, improve the operational stability of the fault diagnosis unit, and maintain the fault diagnosis unit through simple seat disassembly and assembly, reducing the difficulty of maintenance of the fault diagnosis unit. This can also improve the readability of information in the instrument panel, and better transmit the information in the instrument panel to the driver.

## Description

### RELATED APPLICATION INFORMATION

The present application claims priority to a Chinese patent application No. 202211344946.0, filed on October 31, 2022, entitled "Motorcycle", the entire disclosure of which are incorporated herein by reference.

### FIELD OF THE DISCLOSURE

The present application relates to a vehicle, and particularly to a motorcycle.

### BACKGROUND OF THE DISCLOSURE

Motorcycles, as a type of riding vehicle, are increasingly favored by consumers. Motorcycles are widely used in riding, racing, and other fields because of their characteristics, such as lightweight, flexible, and fast driving. Motorcycles are mainly divided into street bikes, off-road bikes, cruise bikes, station wagons, road-racing motorcycles, and the like.

Motorcycles generally include components or parts such as a frame, a vehicle cover, an engine, suspensions, front and rear wheels, and the like. There are more or less unsatisfactory aspects in motorcycles, including the above-mentioned aspects. How to optimize the various aspects of the structure of a motorcycle to provide users with a better driving experience is an urgent technical problem in this field need to solve.

### SUMMARY OF THE INVENTION

The embodiments of the application provides a motorcycle to solve at least one problem existing in the background.

In order to address the shortcomings of existing motorcycles, one aspect of the present application provides a motorcycle. The motorcycle includes a frame, a drive assembly, a transmission assembly, a wheel system, a vehicle cover, a handlebar assembly, a foot pedal assembly, a seat assembly, and a control system. The frame extends substantially in a front-rear direction. The drive assembly is at least partially disposed in the frame. The transmission assembly is at least partially connected to the drive assembly. The wheel system is disposed under the frame and is at least partially connected to the transmission assembly. The wheel system includes a first wheel and a second wheel. The vehicle cover includes a first seat for a driver to ride on and is at least partially connected to the frame. The handlebar assembly is at least partially connected to the frame, and the handlebar assembly includes a handlebar. The foot pedal assembly includes a first foot pedal for a driver to step. The seat assembly is at least partially connected to the frame, and the seat assembly includes a first seat and a second seat. The control system is at least partially disposed within a sub-frame, and the control system includes an intelligent centralized control unit and a fault diagnosis unit. On a first projection plane perpendicular to an up-down direction, the first seat has a first projection on the first projection plane, projected along the up-down direction, the second seat has a second projection on the first projection plane, projected along the up-down direction, and the fault diagnosis unit has a third projection on the first projection plane, projected along the up-down direction, the third projection is within the second projection. On a second projection plane perpendicular to a left-right direction of the motorcycle, the projection of the lowest position of the first seat for the driver to ride-on on the second projection plane, projected along the left-right direction is defined as a first reference point, the projection of the symmetric center point in the left-right direction of the handlebar on the second projection plane, projected along the left-right direction is defined as a second reference point, and the projection of the symmetric center point in the left-right direction of the first foot pedal on the second projection plane, projected along the left-right direction is defined as a third reference point. A distance in the front-back direction between the first reference point and the second reference point is greater than or equal to 568 mm and less than or equal to 695 mm; a distance between the first reference point and the third reference point is greater than or equal to 121 mm and less than or equal to 149 mm; a distance between the second reference point and the third reference point is greater than or equal to 446 mm and less than or equal to 546 mm. The motorcycle further includes an instrument assembly including an instrument and an instrument bracket, and the instrument extends substantially along a preset straight line. Defining a preset plane perpendicular to the up-down direction of the motorcycle, and the angle between the preset straight line and the preset plane is greater than or equal to 0 degree and less than or equal to 60 degrees.

In another aspect of the present application, a motorcycle is disclosed. The motorcycle includes a frame, a drive assembly, a transmission assembly, a wheel system, a vehicle cover, a handlebar assembly, and a foot pedal assembly. The frame extends substantially in a front-rear direction. The drive assembly is at least partially disposed in the frame. The transmission assembly is at least partially connected to the drive assembly. The wheel system is disposed under the frame and is at least partially connected to the transmission assembly. The wheel system includes a first wheel and a second wheel. The vehicle cover includes a first seat for a driver to ride on and is at least partially connected to the frame. The handlebar assembly is at least partially connected to the frame, and the handlebar assembly includes a handlebar. The foot pedal assembly includes a first foot pedal for a driver to step. The motorcycle further includes an instrument assembly including an instrument and an instrument bracket, and the instrument extends substantially along a preset straight line. Defining a preset plane perpendicular to the up-down direction of the motorcycle, and the angle between the preset straight line and the preset plane is greater than or equal to 0 degree and less than or equal to 60 degrees.

Compared with related technologies, in the motorcycle provided in these embodiments, a first reference point is defined as a seating position for the driver, a second reference point is defined as a symmetrical center point of the handlebar along the left-right direction, and a third reference point is defined as a symmetrical center point of the first pedal along the left and right direction. The relative positions between the first reference point, the second reference point, and the third reference point are re-designed, and the fault diagnosis unit of the control system in the motorcycle is disposed below the seat assembly. The angle between the extension direction of the instrument of the instrument assembly in the motorcycle and a horizontal plane is greater than or equal to 0 degree to 60 degrees. Therefore, this can not only overcome the problem of poor comfort for drivers when riding motorcycles, improve the riding posture of drivers when riding motorcycles, enhance driving comfort, but also keep the fault diagnosis unit away from the high-temperature areas of motorcycles, improve the operational stability of the fault diagnosis unit, and maintain the fault diagnosis unit through simple seat disassembly and assembly, reducing the difficulty of maintenance of the fault diagnosis unit. This can also improve the readability of information in the instrument panel, and better transmit the information in the instrument panel to the driver.

The details of one or more embodiments of the present application are presented in the following figures and description to make other features, objectives, and advantages of the present application more concise and understandable.

### BRIEF DESCRIPTION OF THE DRAWINGS

The accompanying drawings described herein are intended to provide further understanding of the present application and constitute a part of the present application. The illustrative embodiments and their descriptions of the present application are used to explain the present application and do not constitute undue limitation of the present application. In FIGs:
FIG. 1 is a schematic view of a motorcycle according to an embodiment of the present application;
FIG. 2 is a schematic view of a frame of the motorcycle in an embodiment of the present application;
FIG. 3 is another schematic view of the motorcycle in an embodiment of the present application;
FIG. 4 is a schematic view of a motorcycle riding triangle according to the embodiment of the present application;
FIG. 5 is another schematic view of the motorcycle riding triangle according to the embodiment of the present application;
FIG. 6 is a schematic view of a sub-frame in the motorcycle in an embodiment of the present application;
FIG. 7 is a top view of a sub-frame in the motorcycle in an embodiment of the present application;
FIG. 8 is a schematic view of the structural components on the first sub-frame according to the embodiment of the present application;
FIG. 9 is another schematic view of the structural components on the first sub-frame according to the embodiment of the present application;
FIG. 10 is a top view of the structural components on the first sub-frame according to the embodiment of the present application;
FIG. 11 is a schematic view of the handlebar assembly in the motorcycle according to the embodiment of the present application;
FIG. 12 is a cross-sectional view of a buffering assembly of the handlebar assembly in the motorcycle according to the embodiment of the present application;
FIG. 13 is a schematic view of another handlebar assembly in the motorcycle according to the embodiment of the present application;
FIG. 14 is a top view of another handlebar assembly in the motorcycle according to the embodiment of the present application;
FIG. 15 is another schematic view of another handlebar assembly in the motorcycle according to the embodiment of the present application;
FIG. 16 is a top view of the front of the motorcycle according to the embodiment of the present application;
FIG. 17 is a left side view of the front of the motorcycle according to the embodiment of the present application;
FIG. 18 is a schematic view of a buffer of the instrument assembly in the motorcycle according to the embodiment of the present application;
FIG. 19 is a schematic view of the buffer of the instrument assembly in the motorcycle according to the embodiment of the present application;
FIG. 20 is a schematic view of the rear of the motorcycle according to the embodiment of the present application;
FIG. 21 is a top view of a motorcycle according to the embodiment of the present application;
FIG. 22 is another schematic view the rear of the motorcycle according to the embodiment of the present application;
FIG. 23 is a schematic view of a fuel tank in the motorcycle according to the embodiment of the present application;
FIG. 24 is a top view of the fuel tank in the motorcycle according to the embodiment of the present application;
FIG. 25 is a cross-sectional view along the A-A direction in FIG. 24.

### DETAILED DESCRIPTION

For better understanding of the present invention, the technical solutions in the embodiments of the present invention will be clearly and completely described below in conjunction with the accompanying drawings.

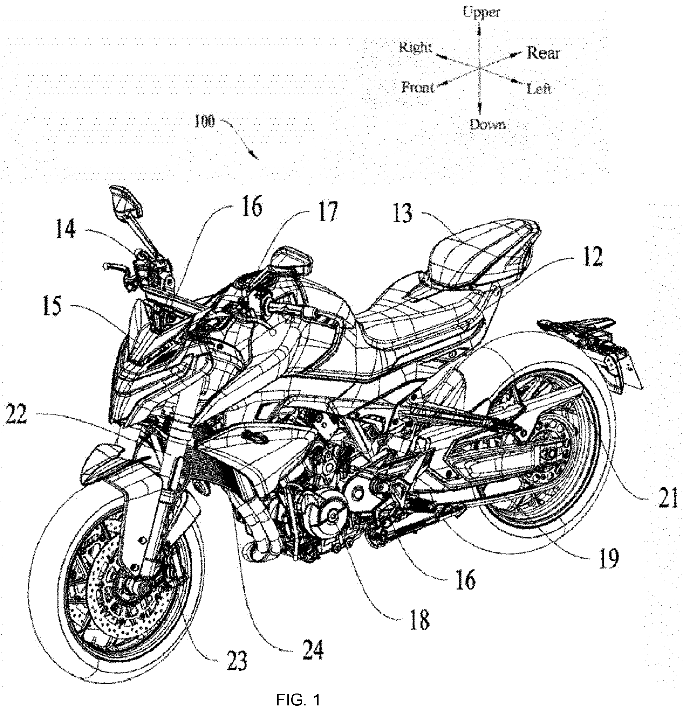

FIG. 1 shows a motorcycle 100. The motorcycle 100 includes a frame 11, a vehicle cover 12, a seat assembly 13, a control assembly 14, a light assembly 15, an instrument assembly 16, a fuel supply system 17, a drive assembly 18, a transmission assembly 19, a wheel system 21, a suspension system 22, a brake assembly 23, and a heat dissipation assembly 24. In order to clearly define the technical solution of the present application, front, rear, left, right, up, and down are also defined as shown in FIG. 1. Among them, the frame 11 is used to form the main frame of motorcycle 100, and other components are directly or indirectly connected to frame 11. The vehicle cover 12 is disposed on the outer side of the frame 11 to cover most of the frame 11 and isolate other components inside the frame 11 from the outside. The seat assembly 13 is connected to the frame 11 and adjacent to the vehicle cover 12. The seat assembly 13 is used for the driver and passengers to ride on. The control assembly 14 is at least partially connected to the frame 11, and the driver can control the motorcycle 100 by operating the control assembly 14. The light assembly 15 is connected to the frame 11. The instrument assembly 16 is connected to the handlebar assembly 141, and is positioned in the substantially middle of the handlebar assembly 141 for the driver to obtain relevant information about the motorcycle. The fuel supply system 17 is at least partially connected to the frame 11 and used to provide fuel for the motorcycle 100. The drive assembly 18 is at least partially fixed to the frame 11 for providing driving force to the motorcycle 100. The drive assembly 18 includes an engine 181 and an exhaust pipe 182, which is used to discharge the exhaust gas generated by the combustion of the motorcycle 100. The transmission assembly 19 is at least partially connected to drive assembly 18 for receiving and transmitting the driving force output by drive assembly 18. The wheel system 21 is at least partially connected to the frame 11 for driving the frame 11 to move. The wheel system 21 includes a first wheel 211 and a second wheel 212. The second wheel 212 is a driving wheel, which is connected to the transmission assembly 19 for receiving the driving force transmitted by the transmission assembly 19. The first wheel 211 is a driven wheel. The suspension system 22 is at least partially connected to frame 11 for connecting wheel system 21 to frame 11. The suspension system 22 includes a front shock absorber 221 connected to the first wheel 211 and used for shock absorption. The brake assembly 23 is at least partially connected to the frame 11 and is used by the driver to brake the motorcycle 100, which includes brake calipers 231 and brake lines for transmitting braking force. The heat dissipation assembly 24 is at least partially located inside the frame 11 and used to dissipate the heat generated by the drive assembly 18 to the outside of the frame 11.

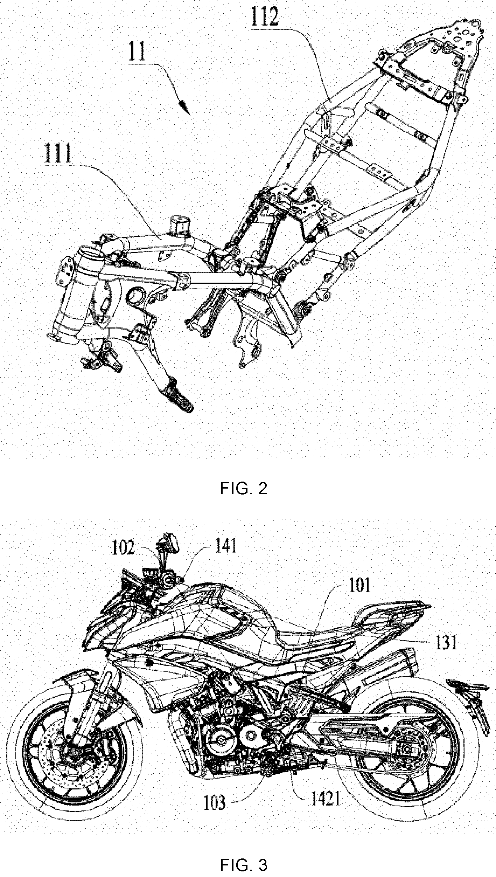

As shown in FIG. 2 to FIG. 5, the frame 11 includes a main frame 111 located at the front of the motorcycle 100 and a sub-frame 112 located at the rear of the motorcycle 100. The main frame 111 is mainly used for installing and carrying the drive assembly 18 of the motorcycle 100, while the sub-frame 112 is mainly used for installing and carrying the seat assembly 13 of the motorcycle 100.

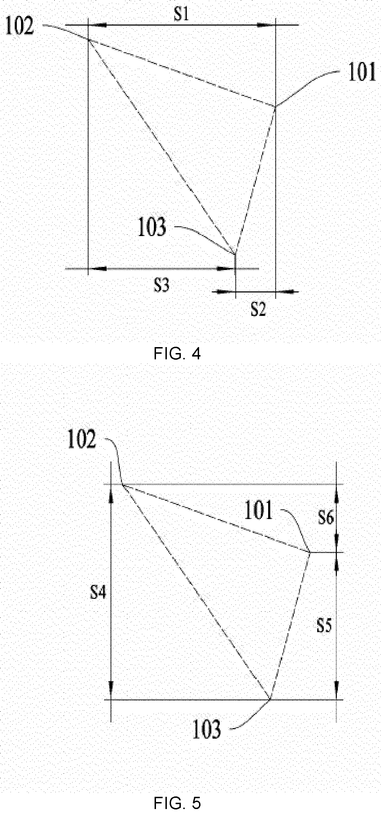

The seat assembly 13 includes a first seat 131 for the driver to ride on and a second seat 132 for the passenger to ride on. The control assembly 14 includes a handlebar assembly 141 for the driver to grip and operate the motorcycle 100, a pedal assembly 142 for the driver and passenger to step on, a gear shifting assembly 143, and a handlebar switch 144 for the driver to operate, in which the pedal assembly 142 includes a first pedal 1421 for the driver to step on and a second pedal 1422 for the passenger to step on. On a second projection plane perpendicular to a left-right direction of the motorcycle 100, the projection of the lowest position of the first seat 131 for the driver to ride on on the second projection plane, projected along the left-right direction is defined as a first reference point 101, the projection of the symmetric center point in the left-right direction of the handlebar 1411 on the second projection plane, projected along the left-right direction is defined as a second reference point 102, and the projection of the symmetric center point in the left-right direction of the first foot pedal 1421 on the second projection plane, projected along the left-right direction is defined as a third reference point 103. The first reference point 101, the second reference point 102, and the third reference point 103 are connected to define a triangle, which is commonly known as a motorcycle 100 riding triangle in the motorcycle 100 field. Along the front-rear direction, the second reference point 102 is positioned in front of the first reference point 101, the third reference point 103 is positioned in front of the first reference point 101, and the second reference point 102 is positioned in front of the third reference point 103. As shown in FIG. 4, in the front-rear direction, a distance S1 between the second reference point 102 and the first reference point 101 is greater than or equal to 568 mm and less than or equal to 695 mm, a distance S2 between the third reference point 103 and the first reference point 101 is greater than or equal to 121 mm and less than or equal to 149 mm, and a distance S3 between the second reference point 102 and the third reference point 103 is greater than or equal to 446 mm and less than or equal to 546 mm. As shown in FIG. 5, along the up-down direction, the second reference point 102 is positioned above the third reference point 103, the second reference point 102 is positioned above the first reference point 101, and the first reference point 101 is positioned above the third reference point 103. In the up-down direction, a distance S4 between the second reference point 102 and the third reference point 103 is greater than or equal to 654 mm and less than or equal to 800 mm, a distance S5 between the first reference point 101 and the third reference point 103 is greater than or equal to 447 mm and less than or equal to 547 mm, and a distance S6 between the second reference point 102 and the first reference point 101 is greater than or equal to 207 mm and less than or equal to 253 mm. The maximum power of the engine 181 of the motorcycle 100 is greater than or equal to 55 kW and less than or equal to 85 kW. The motorcycle 100 in embodiment of the present application is a large-displacement and high-power motorcycle 100, which generates more heat from the engine 181 in its drive assembly 18 when it has strong power.

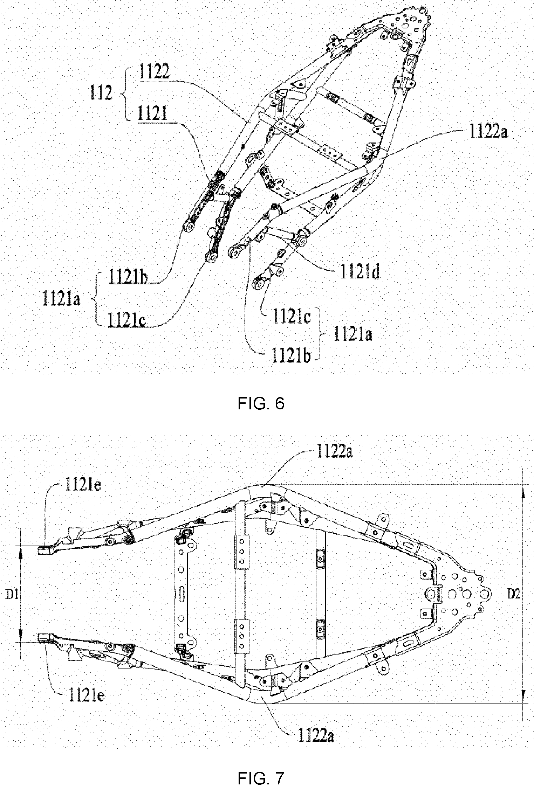

As shown in FIG. 6, according to the embodiment, the sub-frame 112 includes a first sub-frame 1121 and a second sub-frame 1122, with the first sub-frame 1121 positioned in front of the second sub-frame 1122. The first sub-frame 1121 is a forged frame, mainly composed of forged structural members. The second sub-frame 1122 is a pipe frame made of welded pipe fittings. The first sub-frame 1121 and the second sub-frame 1122 are connected together by means of welding. The first sub-frame 1121 includes substantially symmetric structural members 1121a in the front-rear direction. The structural members 1121a include a first member 1121b and a second member 1121c, and the structural members 1121a on two sides are separately connected to the second sub-frame 1122. The first member 1121b is positioned above the second member 1121c. The first member 1121b and the second member 1121c are connected together by a pipe 1121d. The first member 1121b and the pipe 1121d are connected together by welding, and the second member 1121c and the pipe 1121d are also connected together by welding. When only the first member 1121b and the second member 1121c are connected to the pipe 1121d on the structural members 1121a, the welding points are greatly reduced, which improves the overall rigidity and strength of the first sub-frame 1121.

As shown in FIG. 7, the first member 1121b includes a first mounting portion 1121e connected to the main frame 111. A distance between two first mounting portions 1121e of the first members 1121b is defined as a first distance D1. In the motorcycle 100, the space inside frame 11 is already quite compact. If the diameter of the pipe is increased to increase the strength of frame 11, it will inevitably make the space inside frame 11 even narrower, thereby affecting the installation space of various mechanisms inside frame 11. For forged parts, they have high overall rigidity and strength due to their advantages brought by processing technology. Under the same overall rigidity and strength requirements, forged parts have smaller dimensions, especially in terms of thickness in the left-right directions, which can reduce the space they occupy. The position of the first sub-frame 1121 is where the driver's legs clamp when driving the motorcycle 100. If this position is too wide, it will affect the driver's riding comfort and also reduce the driver's ability to control the motorcycle 100. Using cast parts as the first sub-frame 1121 can reduce the space occupied by the first sub-frame 1121 itself within the frame 11, which provides ampler mount space for electrical components, structural members 1121a, and other mechanisms that need to be mounted in this area. At the same time, it can also reduce the frame size of the first sub-frame 1121, which decreases the width of the clamping portion of the motorcycle 100, and increases the driver's ability to control the motorcycle 100.

The sub-frame 112 usually has numerous mounting points, and accordingly, numerous mount structures need to be arranged on the sub-frame 112. It is necessary to weld mount structures at the corresponding positions on the pipe frame when arranging the mount structures. For small-sized or lightweight mechanisms, the mount structure welded on the pipe frame mentioned above has lower requirements for rigidity and strength of the mount structures due to its small weight and size, which can achieve stable mount. However, for larger or heavier structures, the mount structure welded onto the pipe frame mentioned above often fails to meet the rigidity and strength requirements for mount. Forged parts have high overall strength and rigidity, and corresponding mount structures can be designed in advance during forging, which can be manufactured together through forging processes. Therefore, there is no need to arrange mount structures on the forged parts through post-processing methods such as welding, which can increase the integration between the mount structures and the forged parts. At the same time, this can significantly reduce the welding area and minimize the strength reduction caused by welding process. While enhancing the strength of the mount structure, it can also strengthen the connection strength between the mount structures and the casting itself, thereby ensuring that large-sized or heavy-duty mechanisms can be stably mounted on the first sub-frame 1121.

Due to the fact that the second sub-frame 1122 is positioned at the rear of motorcycle 100 and is usually used to mount seats at its top, it usually has a large space. Therefore, using a larger pipe frame can also meet the space requirements. Due to the relatively large space, numerous interconnected structures are mounted on the second sub-frame 1122. The second sub-frame 1122 can form a frame structure with interconnected pipes, thus meeting its overall rigidity and strength requirements. The second sub-frame 1122 is a pipe frame made of welded pipe fittings. The second sub-frame 1122 includes a first protruding portion 1122a protruding outward from the frame in the left-right direction. The second sub-frame 1122 is substantially spindle-shaped viewed from top to bottom. A maximum width of the first protrusion portion 1122a in the left-right direction is defined as a second distance D2, the second distance D2 is greater than or equal to 299 mm and less than or equal to 449 mm. Further, the second distance D2 is greater than or equal to 336 mm and less than or equal to 412 mm. Further, the second distance D2 is greater than or equal to 355 mm and less than or equal to 393 mm. A ratio of the second distance D2 to the first distance D1 is greater than or equal to 1.8 and less than or equal to 2.8. Further, the ratio of the second distance D2 to the first distance D1 is greater than or equal to 2 and less than or equal to 2.6. Further, the ratio of the second distance D2 to the first distance D1 is greater than or equal to 2.15 and less than or equal to 2.45. Along the front-rear direction, a distance between the first mounting portion and the first protruding portion 1122a is greater than or equal to 304 mm and less than or equal to 456 mm. Further, along the front-rear direction, the distance between the first mounting portion and the first protruding portion 1122a is greater than or equal to 342 mm and less than or equal to 418 mm. More further, along the front-rear direction, the distance between the first mounting portion and the first protruding portion 1122a is greater than or equal to 361 mm and less than or equal to 499 mm. Through the above settings, the internal space of the sub-frame can be increased, which optimizes the layout of the vehicle's internal space, thereby achieving the best operating state and appearance of the motorcycle 100.

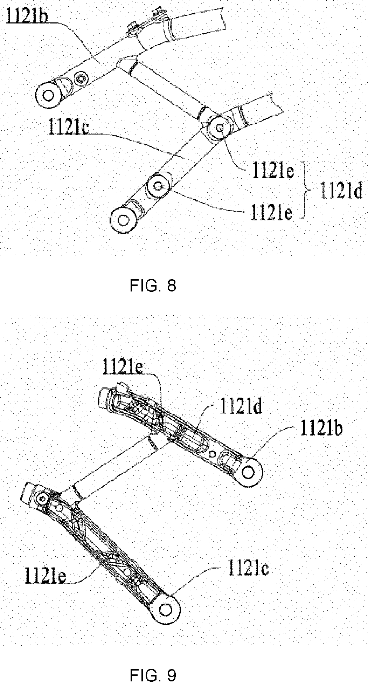

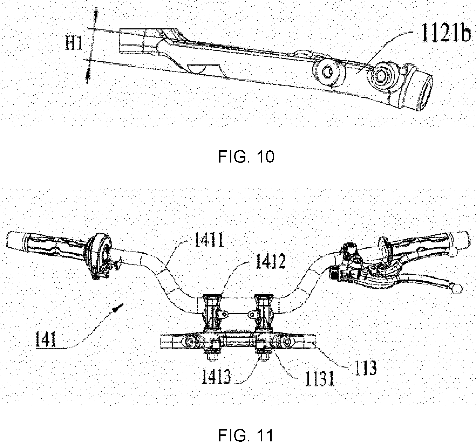

As shown in FIG. 8, the first sub-frame 1121 includes two substantially symmetrical structural members 1121a in the front-rear direction. The structural members 1121a includes a first member 1121b and a second member 1121c, and the first member 1121b and a second member 1121c are forged parts. As shown in FIG. 9, the cross-sections of the first member 1121b and the second member 1121c are substantially semi-circular, and the inner sides of the first member 1121b and the second member 1121c are provided with hollow structures 1121d and reinforcement structures 1121e. The weight of the first member 1121b and the second member 1121c can be reduced due to the hollow structures 1121d, while also saving raw materials during the manufacturing of the first member 1121b and the second member 1121c, thereby reducing production costs. On the basis of the hollow structures, reinforcement structures are arranged at corresponding positions to enhance the overall strength and rigidity of the first member 1121b and the second member 1121c, where the reinforcement structures are usually reinforcement ribs or reinforcement blocks. The hollow structure and reinforcement structure complement each other, while ensuring the overall rigidity and strength of the first member 1121b and the second member 1121c, and minimizing the strength and size of the first member 1121b and the second member 1121c as much as possible. As shown in FIG. 10, the thickness H1 of the first member 1121b in the left-right direction is greater than or equal to 10 mm and less than or equal to 16 mm. A thickness of the second member 1121c in the left-right direction is substantially the same as the thickness H1 of the first member 1121b in the left-right direction. The ratio of the thickness H1 of the first member 1121b in the left-right direction to the diameter of the pipe fittings on the second sub-frame 1122 is greater than or equal to 0.48 and less than or equal to 0.72. Further, the thickness H1 of the first member 1121b in the left-right direction is greater than or equal to 11 mm and less than or equal to 15 mm. The ratio of the thickness H1 of the first member 1121b in the left-right direction to the diameter of the pipe fittings on the second sub-frame 1122 is greater than or equal to 0.54 and less than or equal to 0.66. More further, the thickness H1 of the first member 1121b in the left-right direction is greater than or equal to 12 mm and less than or equal to 14 mm. The ratio of the thickness H1 of the first member 1121b in the left-right direction to the diameter of the pipe fittings on the second sub-frame 1122 is greater than or equal to 0.57 and less than or equal to 0.63, thereby shortening the size of the leg clamping position for the user while riding and increasing user comfort. At least one mount structure is provided on the first member 1121b and the second member 1121c for mounting other components of the motorcycle 100. These mount structures are integrally formed with the first member 1121b or the second member 1121c, thereby avoiding the occurrence of weld seams when fixed to the first member 1121b or the second member 1121c by welding, avoiding the problem of weld seams affecting the strength and rigidity of the overall mechanism, and reducing the impact of weld seams on the external appearance.

As an embodiment, as shown in FIG. 11, the control assembly 14 includes a handlebar assembly 141, which includes a handlebar 1411 and a handlebar mounting seat 1412. The frame 11 further includes an upper bracket 113, the upper bracket 113 includes a handlebar mounting portion 1131. The handlebar 1411 is connected to the upper bracket 113 through the handlebar mounting seat 1412. The handlebar 1411 is connected to the handlebar mounting seat 1412, and the handlebar mounting seat 1412 is connected to the handlebar mounting portion 1131 through a connection member 1413. Specifically, the handlebar mounting portion 1131 of the upper bracket 113 may be designed as an mounting hole. The connection member 1413 includes a first end 1413a and a second end 1413b. The first end 1413a of the connection member 1413 is connected to the handlebar mounting seat 1412, and the second end 1413b of the connection member 1413 passes through the handlebar mounting portion 1131 of the upper bracket 113 and is connected to the handlebar mounting portion 1131.

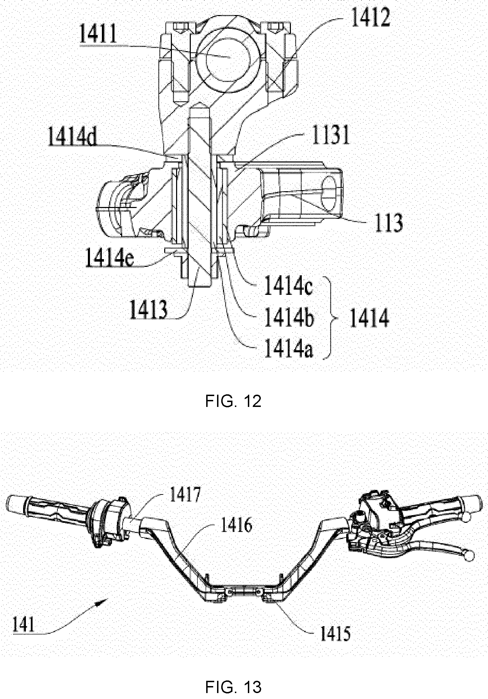

As shown in FIG. 12, a buffering assembly 1414 is sleeved on the outer side of the connection member 1413, the buffering assembly 1414 sequentially includes a first rigid component 1414a, an elastic component 1414b, and a second rigid component 1414c sleeved with each other. The elastic component 1414b is sleeved on the outer side of the first rigid component 1414a, and the second rigid component 1414c is sleeved on the outer side of the elastic component 1414b. Specifically, the first rigid component 1414a may be a steel sleeve, the second rigid component 1414c may also be a steel sleeve, and the elastic component 1414b may be a rubber lining. More further, the elastic component 1414b may be a vulcanized rubber lining. In this embodiment, the buffering assembly 1414 is sleeved on the outer side of the connection member 1413, which can isolate the hard connection between the upper bracket 113 and the handlebar mounting seat 1412, block the vibration transmission from the upper bracket 113 to the handlebar mounting seat 1412, reduce the vibration transmitted to the handlebar 1411, and ensure driving comfort and safety. As an embodiment, a buffer ring 1414d is further disposed between the handlebar mounting seat 1412 and the upper bracket 113. A buffer ring 1414d disposed between the handlebar mounting seat 1412 and the upper bracket 113 can further block the vibration transmission between the upper bracket 113 and the handlebar mounting seat 1412. The vibration from the upper bracket 113 is mainly transmitted to the handlebar mounting seat 1412 through two paths. Through the first path, vibration is transmitted from the upper bracket 113 to the connection member 1413, and then transmitted from the connection member 1413 to the handlebar mounting seat 1412. Through the second path, vibration is directly transmitted from the upper bracket 113 to the handlebar mounting seat 1412 due to at least partial contact between the upper bracket 113 and the handlebar mounting seat 1412. A buffering assembly 1414 is sleeved on the outer side of the connection member 1413 to block vibrations transmitted through the first path, and a buffer ring 1414d is disposed between the upper bracket 113 and the handlebar mounting seat 1412 to block vibrations transmitted through the second path. As an embodiment, an anti-detachment member 1414e is further provided between the first end 1413b of the connection member 1413 and the upper bracket 113. The size of the anti-detachment member 1414e is larger than the size of the handlebar mounting portion 1131 on the upper bracket 113, and the size of the anti-detachment member 1414e is larger than the size of the buffering assembly 1414. The buffering assembly 1414 can be sleeved between the connection member 1413 and the handlebar mounting portion 1131. The buffering assembly 1414 can use its own elasticity to press the connection member 1413, buffering assembly 1414, and handlebar mounting portion 1131 against each other and prevent relative movement, thereby ensuring that the handlebar assembly 141 will not detach from the upper bracket 113. However, the elastic component 1414b in the buffer assembly 1414 is usually a rubber component. After prolonged use, the rubber component may fail, causing the elastic component 1414b to lose its elasticity and unable to press the connection member 1413, buffer assembly 1414, and handlebar mounting portion 1131 against each other, thereby causing a risk of the handlebar assembly 141 falling off the upper bracket 113. By using the anti-detachment member 1414e, even if the connection member 1413, buffering assembly 1414 and handlebar mounting portion 1131 have a gap due to the elastic component 1414b failure, with the protection of the anti-detachment member 1414e, the handlebar assembly 141 can still be prevented from falling off the upper bracket 113, thereby ensuring the safety performance of the motorcycle 100 during operation. Specifically, the anti-detachment member 1414e may be a gasket, and the connection member 1413 runs through a hole in the middle of the gasket. The outer diameter of the gasket is larger than the inner diameter of the handlebar mounting portion 1131. The gasket may be made of elastic rubber materials or rigid metal materials.

As an embodiment, the motorcycle 100 of the present application may include an integrated handlebar assembly 141, with an integrated mounting seat as shown in FIG. 13, and the handlebar assembly 141 is integrally formed. In this embodiment, the handlebar assembly 141 includes a mounting rack 1415, an extension portion 1416, and a handlebar 1417 on either side of the mounting rack 1415. The extension portion 1416 is positioned between the mounting rack 1415 and the handlebar 1417. One end of the extension portion 1416 is connected to the mounting rack 1415, and the other end of the extension portion 1416 is connected to the handlebar 1417. The extension portion 1416 connects the mounting rack 1415 and the handlebar 1417. In the handlebar assembly 141, the mounting rack 1415 is integrally formed with at least the extension portion 1416. As an embodiment, the mounting rack 1415, the extension portion 1416, and the handlebar 1417 are integrally formed. Specifically, the mounting rack 1415, extension portion 1416, and handle 1417 are integrally molded and cast. The integrated molding of handlebar assembly 141 can reduce the number of components, and reduce overall space occupied by handlebar assembly 141, which can provide greater installation space for other components and increase the freedom of arranging other components. A larger mounting rack 1415 can be arranged, which can provide more space for mounting more components.

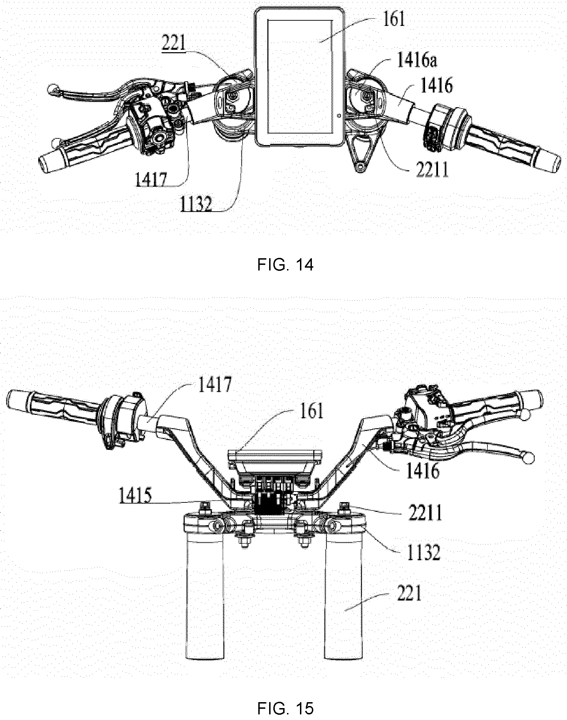

As shown in FIG. 14 and FIG. 15, in one embodiment, the instrument assembly 16 of the motorcycle 100 may be disposed on the mounting rack 1415. The position of the hand-grip portion 1417 of the handlebar assembly 141 is higher than the position of the mounting rack 1415 in the up-down direction, and the extension portion 1416 is substantially inclined outwards. An adjusting hole 1416a is defined on the extension portion 1416. The adjusting hole 1416a extends substantially in the up-down direction. The upper bracket 113 includes a shock absorber mounting portion 1132 for fixing a front shock absorber 221. On a first plane 110 perpendicular to the up-down direction, the shock absorber mounting portion 1132 has a first projection on the first plane 110, projected along the up-down direction, and the adjusting hole 1416a has a second projection on the first plane 110, projected along the up-down direction, and the first projection is at least located within the second projection. Further, at least 50% of the first projection area is positioned within the second projection. The front shock absorber 221 of the motorcycle 100 is connected to the shock absorber mounting portion 1132 of the upper bracket 113, and an adjusting portion 2211 is arranged at the top of the front shock absorber 221. After the front shock absorber 221 is mounted to the shock absorber mounting portion 1132, the adjusting portion 2211 protrudes from the shock absorber mounting portion 1132. A user can adjust the adjusting portion 2211 of the front shock absorber 221 through tools to change the damping and elasticity of the front shock absorber 221. The adjusting portion 2211 has a third projection on the first plane 110, projected along the up-down direction, and the third projection is located within the second projection. In the embodiment, the handlebar assembly 141 is integrally formed and the handlebar assembly 141 has a larger size. After the handlebar assembly 141 is mounted on the upper bracket 113, the handlebar assembly 141 will cover the adjusting portion 2211 of the front shock absorber 221 in the up-down direction. Specifically, the extension portion 1416 of the handlebar assembly 141 is located above the adjusting portion 2211 of the front shock absorber 221, which will cover the adjusting portion 2211. An adjusting hole 1416a is defined on the handlebar assembly 141 at a position corresponding to the adjusting portion 2211 of the front shock absorber 221, which can facilitate the user to adjust the front shock absorber 221 through the handlebar assembly 141.

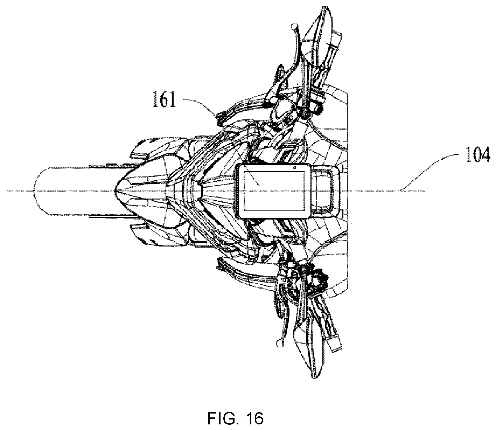

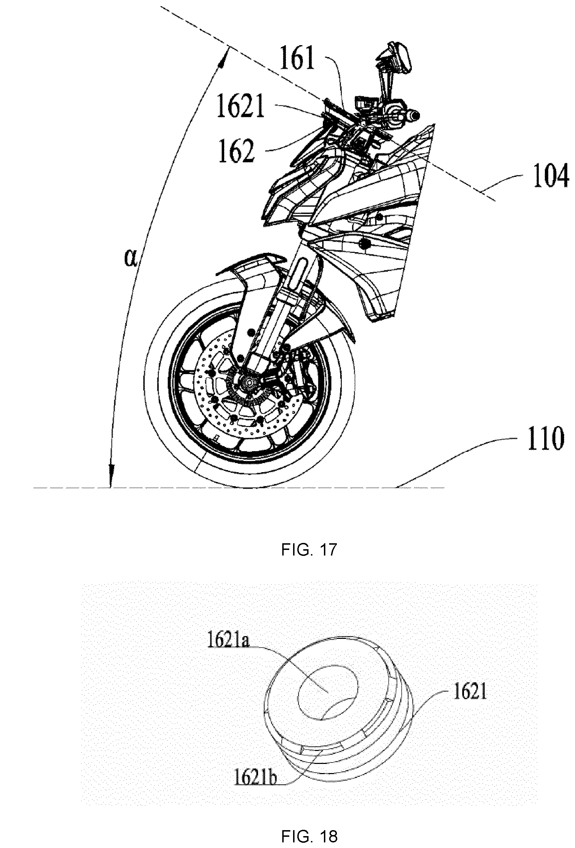

As shown in FIG. 16 and FIG. 17, the instrument assembly 16 includes an instrument 161 and an instrument bracket 162. The instrument 161 is connected to the instrument bracket 162, and the instrument bracket 162 is connected to a handlebar 1411. In the instrument assembly 16, the instrument 161 is positioned vertically, that is, the instrument 161 extends along the direction of a first straight line 104, which is substantially perpendicular to the left-right direction. Specifically, as shown in FIG. 16, in the direction of the first straight line 104 where the instrument 161 extends, the length along the first straight line 104 of the instrument 161 is greater than the width along a direction perpendicular to the first straight line 104 of the instrument 161. The ratio of the length along the first straight line 104 of instrument 161 to the width on a plane perpendicular to the first straight line 104 of instrument 161 is greater than or equal to 1.2 and less than or equal to 1.85. Further, the ratio of the length of instrument 161 along a plane where the first straight line 104 is located to the width on a plane perpendicular to the first straight line 104 of instrument 161 is greater than or equal to 1.35 and less than or equal to 1.70. More further, the ratio of the length along the first straight line 104 of instrument 161 to the width on a plane perpendicular to the first straight line 104 of instrument 161 is greater than or equal to 1.45 and less than or equal to 1.62. On a projection plane perpendicular to the up-down direction, the instrument 161 has a first projection, projected along the up-down direction, and the length of the first projection in the front-rear direction is greater than or equal to the length of the first projection in the left-right direction.

As shown in FIG. 17, defining a first plane 110 perpendicular to the up-down direction of the motorcycle, and an angle α defined between the first straight line 104 and the first plane 110 is greater than or equal to 0 degree and less than or equal to 60 degrees. More further, the angle α defined between the first straight line 104 and the first plane 110 is greater than or equal to 10 degrees and less than or equal to 50 degrees. More further, the angle α defined between the first straight line 104 and the first plane 110 is greater than or equal to 20 degrees and less than or equal to 40 degrees. The instrument 161 is mounted to the instrument 161 bracket by means of soft connection. The instrument 161 of the motorcycle 100 can display numerous vehicle information for the driver. The instrument 161 has some important electronic components, and these electronic components are sensitive to vibration. Especially a display screen in the instrument 161 is more sensitive to vibration, and frequent or significant vibrations can easily cause the display screen to fail, resulting in instrument 161 being unable to provide the driver with vehicle information for motorcycle 100. During running of the motorcycle 100, the vibrations on motorcycle 100 include high-frequency vibrations generated by the drive assembly 18 and low-frequency vibrations generated by the contact between the wheel system 21 and the road surface. The high-frequency vibration from the motorcycle 100 is generated by the drive assembly 18, and is transmitted along frame 11, with some of the vibration transmitted to the handlebar 1411 along the frame 11. The low-frequency vibration from the motorcycle 100 is generated by the contact between the wheel system 21 and the road surface, and is transmitted to handlebar 1411 through the suspension system 22 and steering assembly or the frame 11. The instrument assembly 16 is mounted on the handlebar 1411, and the vibration is further transmitted to the instrument assembly 16, and finally the vibration is transmitted to the instrument 161 in the instrument assembly 16. In the present embodiment, at least two buffers 1621 are disposed between the instrument 161 and the instrument bracket 162 for connecting the instrument 161 and the instrument bracket 162, so as to reduce the impact of vibration on the instrument 161 and to isolate the vibration transmission between the instrument bracket 162 and the instrument 161.

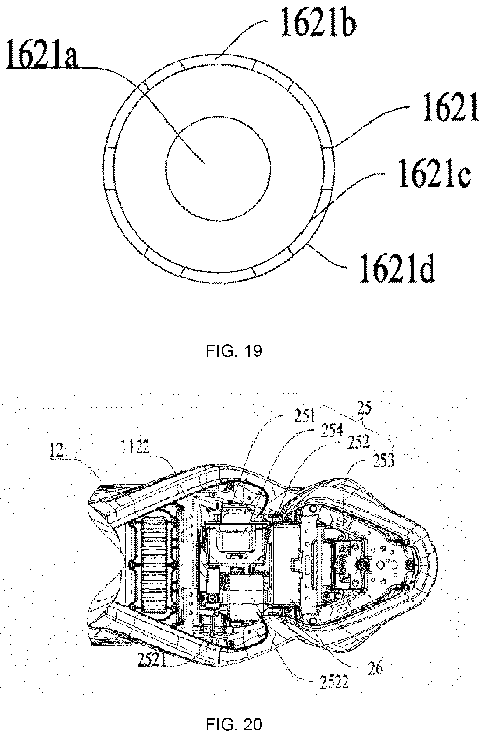

As shown in FIG. 18, a fixing hole 1621a for allowing fasteners to run through is defined in the buffer 1621. The buffer 1621 is substantially cylindrical. Each buffer 1621 has two end faces provided on the buffer 1621 along the axial direction of the buffer 1621. At least one end face of the buffer 1621 is processed by cutting a groove. As shown in FIG. 19, the end face is substantially circular, and arc-shaped grooves 1621b are defined at the edge of the end face. The center of the arc-shaped groove 1621b substantially coincides with the center of the end face. A central angle corresponding to an arc-shaped groove 1621b is greater than 0 degree and less than 180 degrees. Further, the central angle corresponding to an arc-shaped groove 1621b is greater than or equal to 10 degrees and less than or equal to 150 degrees. More further, the central angle corresponding to an arc-shaped groove 1621b is greater than or equal to 20 degrees and less than or equal to 120 degrees. More further, the central angle corresponding to an arc-shaped groove 1621b is greater than or equal to 30 degrees and less than or equal to 90 degrees. At least two arc-shaped grooves 1621b are defined on the end face, and the sum of the central angles corresponding to all arc-shaped grooves 1621b is greater than or equal to 150 degrees and less than or equal to 300 degrees. Further, the sum of the central angles corresponding to all arc-shaped grooves 1621b is greater than or equal to 180 degrees and less than or equal to 270 degrees. More further, the sum of the central angles corresponding to all arc-shaped grooves 1621b is greater than or equal to 210 degrees and less than or equal to 240 degrees. Along a radial direction of the end face, the arc of the inner edge of arc-shaped groove 1621b is defined as an inner arc 1621c, and the arc of the outer edge of arc-shaped groove 1621b is defined as an outer arc 1621d. A ratio of a diameter of the outer arc 1621d to a diameter of the inner arc 1621c is greater than 1 and less than or equal to 1.32. Further, the ratio of the diameter of outer arc 1621d to the diameter of inner arc 1621c is greater than or equal to 1.02 and less than or equal to 1.3. More further, the ratio of the diameter of outer arc 1621d to the diameter of inner arc 1621c is greater than or equal to 1.05 and less than or equal to 1.2. Cutting grooves on the end face of buffer 1621 can increase the contact area between buffer 1621 and surrounding components when compressed, can increase the assembly fitting surface of buffer 1621 when mounted, further increase the assembly fitting surface area, and improve the assembly stability of instrument 161. Therefore, this can reduce the vibration transmission between instrument 161 and instrument bracket 162, ensuring that instrument 161 receives less vibration interference during the running of motorcycle 100.

As shown in FIG. 1, FIG. 6, FIG. 7, FIG. 20, and FIG. 21, as one embodiment, the motorcycle 100 further includes a control system 25 and a power supply 26, in which, the control system 25 is used to control the operation of motorcycle 100 and collect running data of the motorcycle 100. The control system 25 includes an engine control unit 251, an intelligent centralized control unit 252, and a fault diagnosis unit 253. The power supply 26 is mounted in frame 11 to supply power to the electrical appliances in the motorcycle 100. Electrical equipment for the motorcycle 100 are mounted in sub-frame 112. Specifically, the electrical equipment for the motorcycle 100 are mounted in the first sub-frame 1121 and the second sub-frame 1122. That is to say, the electrical equipment for the motorcycle 100 are mounted in the space under the first seat 131 and the second seat 132. When projected along the up-down direction, the first seat 131 has a first projection on the first plane 110, and the second seat 132 has a second projection on the first plane 110. Due to the large displacement of the motorcycle 100 in the present embodiment, the drive assembly 18 generates a significant amount of waste heat during running. The temperature in and around the area where the drive assembly 18 is located is still relatively high although corresponding heat dissipation structures are also designed on the motorcycle 100. A large number of electrical equipment in the motorcycle 100, especially the control system 25 which includes numerous electrical devices that are difficult to withstand the high temperatures near the drive assembly 18. The first sub-frame 1121 and the second sub-frame 1122 are located at the rear of the motorcycle 100, far away from the heat source of the drive assembly 18, and have relatively large space, providing corresponding space for mounting electrical equipment.

As an embodiment, a fault diagnosis unit 253 (OBD unit) is located in the space defined by the second sub-frame 1122, specifically, the fault diagnosis unit 253 (OBD unit) is located in the space defined by the second sub-frame 1122 below the second seat 132. The fault diagnosis unit 253 has a third projection on the first plane 110, projected along the up-down direction, the third projection is located within the second projection. Fewer components are arranged around the second seat 132 because it is located at the rearmost end of the motorcycle 100. The components involved in disassembling the second seat 132 are relatively few, thereby making it relatively easy to disassemble the second seat 132. The fault diagnosis unit 253 is located at the rear of the second sub-frame 1122 in the front-rear direction, and above the second sub-frame 1122 in the up-down direction. The fault diagnosis unit 253 is located below the second seat 132 of the motorcycle 100. By simply removing the second seat 132, the fault diagnosis unit 253 can be exposed to the outside, thereby making it easier to read corresponding vehicle data from the fault diagnosis unit 253 and diagnose the motorcycle 100. The motorcycle 100 further includes a power supply 26, and the power supply 26 is disposed at the rear of the second sub-frame 1122. Specifically, the power supply 26 is located in the space defined by the second sub-frame 1122 below the second seat 132, and the power supply 26 is located in front of the fault diagnosis unit 253 in the front-rear direction. On a first plane 110 perpendicular to the up-down direction, the power supply 26 has a fourth projection on the first plane 110, projected along the up-down direction, the fourth projection is located within the second projection. Similarly, the power supply 26 is located at the rear of the second sub-frame 1122, below the second seat 132, and also has the advantage of easy installation and replacement.

The intelligent centralized control unit 252 (T-box unit) is located in the space defined by the second sub-frame 1122. Specifically, most of the intelligent centralized control unit 252 is located below the first seat 131 of the motorcycle 100. The intelligent centralized control unit 252 has a fifth projection on the first plane 110, projected along the up-down direction, and the fifth projection is located within the first projection. The intelligent centralized control unit 252 is mainly used for information transmission between the motorcycle 100 and remote terminals, for example, sending the running information, status information, or alarm information of the motorcycle 100 to the remote terminals. The intelligent centralized control unit 252 includes a signal transmission module 2521. The signal transmission module 2521 is located at the upper portion of the intelligent centralized control unit 252 in the up-down direction, and the signal transmission surface in the signal transmission module 2521 faces upwards. The intelligent centralized control unit 252 needs to communicate with remote terminals, and its signal transmission and reception capabilities and effects directly affect its communication with remote terminals. The intelligent centralized control unit 252 is substantially located at the top of the second sub-frame 1122, with only the first seat 131 mounted above thereon. The main material of the first seat 131 is polymer material, which has little shielding effect on signals. The signal transmission surface in the signal transmission module 2521 is located at the top of the signal transmission module 2521 and faces upwards, which can avoid the shielding of the signal of the intelligent centralized control unit 252 by metal parts in the motorcycle 100, thereby ensuring smooth signal transmission of the intelligent centralized control unit 252. The intelligent centralized control unit 252 is fixed by an elastic belt 2522, which may specifically be a rubber pull strap. One end of the elastic belt 2522 is fixed to the power supply 26, and the other end of the elastic belt 2522 is fixed to the frame 11. The intelligent centralized control unit 252 is fixed with elastic belt 2522. When the motorcycle 100 is running, the elastic belt 2522 can slow down the transmission of vibration from the motorcycle 100 to the intelligent centralized control unit 252, reduce the vibration received by the intelligent centralized control unit 252, ensure the normal running of the intelligent centralized control unit 252, ensure the service life of the intelligent centralized control unit 252, and reduce maintenance costs.

The control system 25 of the motorcycle 100 further includes a fuse box 254 to ensure the normal operation of the circuit, the fuse box 254 is located in the space defined by the second sub-frame 1122. Specifically, the fuse box 254 is located in the space defined by the second sub-frame 1122 below the first seat 131, and the fuse box 254 is substantially located on the right of the intelligent centralized control unit 252 in the left-right direction. The fuse box 254 has a sixth projection on the first plane 110, projected along the up-down direction, and the sixth projection is located within the second projection. The fuse box 254 is located below the first seat 131, which can be replaced by simply removing the first seat 131 without having to remove the vehicle cover 12 of the motorcycle 100 separately. The engine control unit 251 in the motorcycle 100 control unit is also located in the space defined by the second sub-frame 1122. Specifically, the engine control unit 251 is located in the space defined by the second sub-frame 1122 below the first seat 131, and is substantially located on the right of the fuse box 254 in the left-right direction. The engine control unit 251 is substantially located on the side of the second sub-frame 1122. The engine control unit 251 is used to control the running of the engine 181, and numerous control wiring harnesses need to be connected between the engine control unit 251 and the engine 181. When the engine control unit 251 is located on the side of the frame 11, the wiring harness of the engine control unit 251 can be laid along the pipe fittings of the frame 11, with shorter wiring distance and smoother wiring, which can avoid mutual interference with other components and wiring harnesses. The above-mentioned intelligent centralized control unit 252 (T-box unit), fuse box 254, and engine control unit 251 (BCM unit) are substantially located at the position of a first protrusion portion 1122a of the second sub-frame 1122. The second sub-frame 1122 is spindle-shaped and protrudes outward from the frame 11 of the motorcycle 100 at the position of the first protrusion portion 1122a. The position of the first protrusion portion 1122a has a relatively large lateral space, so the first protrusion portion 1122a has a larger placement space. The distance between the first protrusion portion 1122a and the drive assembly 18 in the front-rear direction is relatively far. The temperature in the area of the first protrusion portion 1122a is relatively low, and vibration is also relatively small when the motorcycle 100 is running. The intelligent centralized control unit 252, the fuse box 254, and the engine control unit 251 are mounted in this area, which can ensure the safe operation of the intelligent centralized control unit 252, the fuse box 254, and the engine control unit 251, as well as ensure their service life and reduce the cost of later maintenance. The geometric center of the intelligent centralized control unit 252 in the left-right direction has a first center on the first plane 110, the axis of the second wheel 212 has a second center on the first plane 110, the axis of the first wheel 211 has a third center on the first plane 110, and the midpoint of the line connecting the second center and the third center is a fourth center. The first center is located in front of the second center, and the third center is located in front of the first center in the front-rear direction.

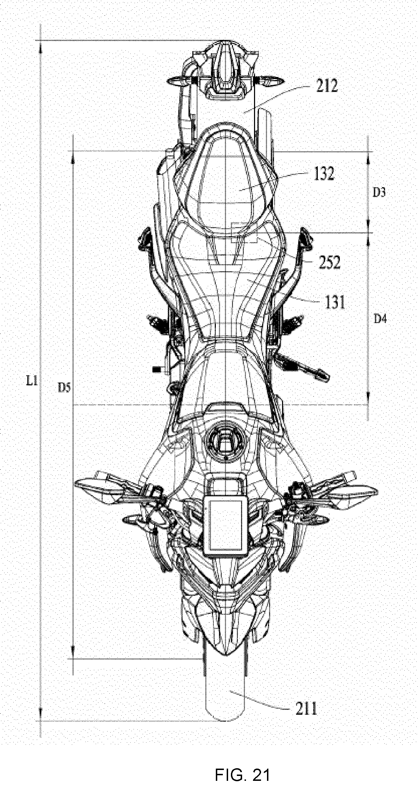

As shown in FIG. 21, the motorcycle 100 has a third distance D3 between the first center and the second center, a fourth distance D4 between the first center and the fourth center, and a fifth distance D5 between the second center and the third center in the front-rear direction. The motorcycle 100 has a vehicle length L1. The third distance D3 is greater than or equal to 200 mm and less than or equal to 300 mm, the ratio of the third distance D3 to the fifth distance D5 is greater than or equal to 0.13 and less than or equal to 0.21, and the ratio of the third distance D3 to the vehicle length L1 is greater than or equal to 0.09 and less than or equal to 0.14. Further, the third distance D3 is greater than or equal to 225 mm and less than or equal to 275 mm, the ratio of the third distance D3 to the fifth distance D5 is greater than or equal to 0.15 and less than or equal to 0.19, and the ratio of the third distance D3 to the vehicle length L1 is greater than or equal to 0.10 and less than or equal to 0.13. More further, the third distance D3 is greater than or equal to 237 mm and less than or equal to 263 mm, the ratio of the third distance D3 to the fifth distance D5 is greater than or equal to 0.16 and less than or equal to 0.18, and the ratio of the third distance D3 to the vehicle length L1 is greater than or equal to 0.11 and less than or equal to 0.12. The fourth distance D4 is greater than or equal to 392 mm and less than or equal to 589 mm, the ratio of the fourth distance D4 to the fifth distance D5 is greater than or equal to 0.26 and less than or equal to 0.40, and the ratio of the fourth distance D4 to the vehicle length L1 is greater than or equal to 0.18 and less than or equal to 0.28. Further, the fourth distance D4 is greater than or equal to 441 mm and less than or equal to 540 mm, the ratio of the fourth distance D4 to the fifth distance D5 is greater than or equal to 0.29 and less than or equal to 0.37, and the ratio of the fourth distance D4 to the vehicle length L1 is greater than or equal to 0.20 and less than or equal to 0.26. More further, the fourth distance D4 is greater than or equal to 466 mm and less than or equal to 516 mm, the ratio of the fourth distance D4 to the fifth distance D5 is greater than or equal to 0.31 and less than or equal to 0.35, and the ratio of the fourth distance D4 to the vehicle length L1 is greater than or equal to 0.22 and less than or equal to 0.24.

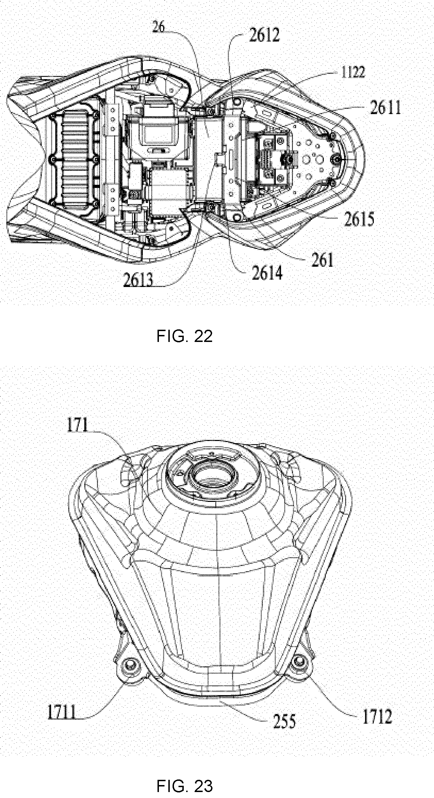

As shown in FIG. 22, the motorcycle 100 includes a power supply 26, the power supply 26 is located at the rear of the second sub-frame 1122. A power limit member 261 is arranged at the top of the power supply 26, the power limit member 261 extends in the left-right direction. The two ends of power limit member 261 are respectively connected to the second sub-frame 1122. A power buffer 2611 is disposed on the side of the power limit member 261 adjacent to the power supply 26; and a seat buffer 2612 is disposed on the side of the power limit member 261 away from the power supply 26. The power limit member 261 is mainly used to fix the power supply 26 inside the frame 11 under the seat, which prevents relative movement between the power supply 26 and the frame 11 during the running of the motorcycle 100, the movement may impact the frame 11 or impact the seat assembly 13 located above the frame 11. At the same time, since the power supply 26 itself cannot withstand significant impacts, it is even more necessary to firmly fix it on the frame 11. Therefore, in the embodiment of the present application, a power limit member 261 is used to limit the power supply 26. The power limit member 261 may be a sheet metal, which has low elasticity and high rigidity and strength, and almost no plastic deformation. Even after being subjected to certain impacts, it can still maintain its original shape without deformation. Due to the use of a high hardness power limit member 261 made of sheet metal to fix the power supply 26, so the power limit member 261 and the power supply 26 are connected by means of a hard contact. Although the power limiting member 261 can ensure that the power supply 26 will not move, friction still be present between the power limit member 261 and the power supply 26. In this case, the housing of the power supply 26 may wear and tear. After long-term use, the wear and tear may directly damage the power supply 26, thereby leading to danger. Therefore, a power buffer 2611 is mounted on the side of the power limit member 261 adjacent to the power supply 26. Specifically, the power buffer 2611 may be a component with certain elasticity and buffering effect, such as a buffering sponge or rubber. Due to the power supply 26 being located below the seat assembly 13, the power limit 261 is located between the seat assembly 13 and the power supply 26, with the seat assembly 13 directly in contact with the power limit 261. When the motorcycle 100 is running, due to the bumpy road surface, the seat assembly 13 is inevitably subject to vertical movement, and the seat assembly 13 and the power limit member continuously collide, and further may damage the power limit member 261 or the seat assembly 13. Therefore, a seat buffer 2612 is mounted on the side of the power limit member 261 away from the power supply 26 to avoid direct hard contact between the power limit member 261 and the seat assembly 13. Specifically, the power buffer 261 may be a component with certain elasticity and buffering effect, such as a buffering sponge or rubber. In addition, the power buffer 261 is an elastic component that can increase the frictional force between the power limit 261 and the power supply 26 after compression, which can ensure that the power supply 26 does not move in the horizontal direction. A seat limit bracket 2613 is disposed at the front end of the power limit member 261 in the front-rear direction. The power limit member 261 is located substantially below the front end of the second seat 132. A seat limit bracket 2613 is disposed on the power limit member 261 to fix the front end of the second seat 132, which can avoid the problem of occupying space in the frame 11 due to the installation of seat limit brackets 2613 in other positions of the frame 11. Pulling strap fixings 2614 are disposed on two sides of the power limit member 261.

In order to ensure that passengers sitting on the second seat 132 can grip the motorcycle 100 components and prevent rear seat passengers from falling off the motorcycle 100, a seat pull strap is usually installed between the first seat 131 and the second seat 132 of the motorcycle 100 for passengers sitting on the second seat 132 to grip by hand. Pulling strap fixings are directly located on two sides of the power limit member 261, integrating the functions of power limit, seat limit, and strap fixing onto the power limit member 261. The seat limit bracket and pulling strap fixing portions are integrated onto the power limit member 261, improving the integration of components and avoiding the problem of occupying a lot of space in the frame 11 when various components are scattered. This can streamline the components at the rear of the motorcycle 100, making the structure of the motorcycle 100 more compact and reducing the width of the rear of the motorcycle 100 in the left-right direction. At least a portion of the front and rear ends of the power limit member 261 defines flanged structures 2615. The flanged structures at the front and rear ends of the power limit member 261 can enhance its rigidity and strength in the left-right direction, thereby ensuring that the power limit member 261 is not easily bent or broken when subjected to impact forces in the left-right direction. The two ends of the power limit member 261 in the left-right direction are respectively fixed to the second sub-frame 1122, and the two ends of the power limit member 261 in the left-right direction are fixed to the second sub-frame 1122, thereby ensuring that the power supply 26 can be completely fixed inside the second sub-frame 1122 without relative movement in the up-down direction.

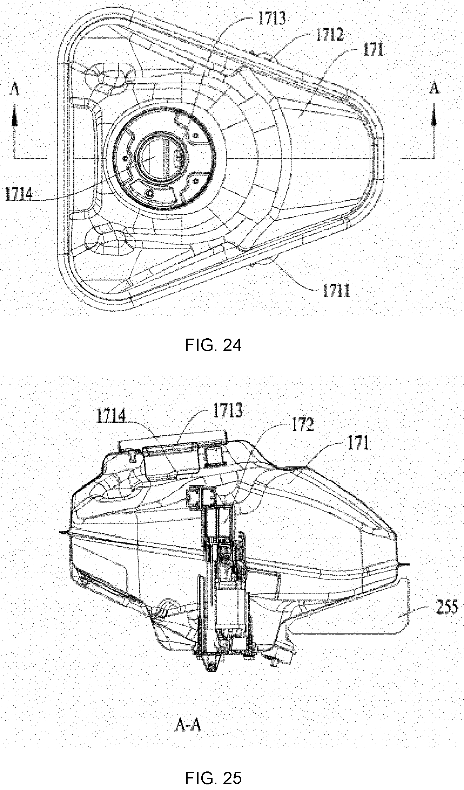

As shown in FIG. 23 to FIG. 25, the motorcycle 100 further includes a control system 25, the control system 25 is used to control the running of the motorcycle 100 and collect the running data. The control system 25 includes a vehicle control unit 255. The fuel tank 171 defines a first mounting position 1711 and a second mounting position 1712, which are located at the rear of the fuel tank 171. The rear of the fuel tank 171 is connected to the sub-frame 112 through the first mounting position 1711 and the second mounting position 1712. The fuel tank 171 has a fuel filler 1713, the fuel filler 1713 is used to fill fuel to the fuel tank 171. A fuel-blocking structure 1714 is disposed below the fuel filler 1713, the fuel-blocking structure 1714 is used to guide the fuel gun to extend forward into the fuel tank 171 from the fuel filler 1713 when refueling, thereby avoiding the fuel gun from extending backward into the fuel tank 171 from the fuel filler 1713. Due to the aforementioned arrangement of fuel tank 171, in order to arrange the vehicle control unit 255 below the rear of fuel tank 171, the rear of fuel tank 171 is at least partially recessed upwards to define a stepped structure. A fuel pump 172 for pumping fuel to the engine 181 needs to be mounted in the fuel tank 171. In the present embodiment of the application, due to the rear of the fuel tank 171 being at least partially recessed upwards, the height of the concave portion at the rear of the fuel tank 171 is no longer sufficient to mount the fuel pump 172. Moreover, since the height of the concave portion in the up-down direction is higher than that of other portions of the fuel tank 171, installing the fuel pump 172 here is unable to pump all the fuel in the fuel tank 171, which indirectly reduces the volume of the fuel tank 171. Therefore, it is necessary to adjust the position of fuel pump 172 towards the front of fuel tank 171. After adjusting the fuel pump 172 towards the front of the fuel tank 171 in the present embodiment, at least a portion of the fuel pump 172 is located directly below the fuel filler 1713 in the up-down direction, that is, the projection of the fuel filler 1713 on the first plane 110 in the up-down direction at least partially overlaps with the projection of the fuel pump 172 on the first plane 110 in the up-down direction. The fuel pump 172 is located directly below the fuel filler 1713. When refueling, if the fuel gun is inserted into the fuel tank 171 perpendicular to the fuel filler 1713 or biased towards the rear of the fuel tank 171 from the fuel filler 1713, there is a risk of collision between the fuel gun and the fuel pump 172, which may affect the normal operation of the fuel pump 172 and even cause damage to the fuel pump 172. In addition, even if the fuel gun does not directly collide with the fuel pump 172, the rapidly added fuel will still impact the fuel pump 172, which may have adverse effects on the normal use of the fuel pump 172 and even reduce its service life. In the present embodiment of the application, A fuel-blocking structure 1714 is disposed below the fuel filler 1713, the fuel-blocking structure is used to guide the fuel gun to extend forward into the fuel tank 171 from the fuel filler 1713 when refueling, thereby avoiding a fuel gun from entering the fuel tank 171 backwards from the fuel filler 1713 and colliding with or interfering with the normal operation of the fuel pump 172. The fuel-blocking structure 1714 is at least partially located below the fuel filler 1713, and the fuel-blocking structure 1714 is inclined downward from the rear of the fuel tank 171 towards the front of the fuel tank 171. The projection of the fuel filler 1713 projected in the up-down direction on the first plane 110 is defined as a first projection, the projection of the fuel-blocking structure 1714 projected in the up-down direction on the first plane 110 is defined as a second projection, and the projection of the fuel pump 172 projected in the up-down direction on the first plane 110 is defined as a third projection. The third projection at least partially overlaps with the second projection, the third projection at least partially overlaps with the first projection, and the second projection at least partially overlaps with the first projection. The area of the overlapping portion between the first projection and the second projection is less than or equal to half of the area of the first projection. The first projection is located in front of the second projection, and the second projection is located in front of the third projection along the front-rear direction. The front end of the first projection is located in front of the front end of the second projection, and the front end of the second projection is located in front of the front end of the third projection along the front-rear direction. Further, the first projection is substantially circular, and the front end of the second projection is located at a diameter of the first projection perpendicular to the front-rear direction. The front end of the second projection is located behind the median line of the first projection in the front-rear direction. The fuel pump 172 is located behind the fuel-blocking structure 1714, which can provide good protection for the fuel pump 172, prevent damage to the fuel pump 172, and ensure the service life of the fuel pump 172. The fuel-blocking structure 1714 should not exceed half of the position of the fuel filler 1713 in the front-rear direction, so that there is a space between the fuel-blocking structure 1714 and the housing of fuel tank 171 that allows the fuel gun to enter, ensuring that normal refueling operations will not be affected. In the up-down direction, there is a certain space left between the fuel-blocking structure 1714 and the housing of the fuel tank 171, which also facilitates observation of the situation inside the fuel tank 171 from the fuel filler 1713, particularly the remaining fuel inside the fuel tank 171.

It should be understood that for those skilled in the art, improvements or transformations can be made based on the above description, and all such improvements and modifications should fall within the scope of protection of the claims attached to the present invention.

## Claims

1. A motorcycle comprising
a frame extending substantially in a front-rear direction;
a drive assembly at least partially disposed in the frame;
a transmission assembly at least partially connected to the drive assembly;
a wheel system disposed under the frame and at least partially connected to the transmission assembly, the wheel system comprising a first wheel and a second wheel;
a vehicle cover comprising a first seat for a driver to ride on and at least partially connected to the frame;
a handlebar assembly at least partially connected to the frame, the handlebar assembly comprising a handlebar;
a foot pedal assembly comprising a first foot pedal for a driver to step;
a seat assembly at least partially connected to the frame, the seat assembly comprising the first seat and a second seat;
a control system at least partially disposed within a sub-frame, the control system comprising an intelligent centralized control unit and a fault diagnosis unit;
wherein, on a first projection plane perpendicular to an up-down direction, the first seat has a first projection on the first projection plane along the up-down direction, the second seat has a second projection on the first projection plane along the up-down direction, and the fault diagnosis unit has a third projection on the first projection plane along the up-down direction, the third projection is within the second projection; on a second projection plane perpendicular to a left-right direction of the motorcycle, the projection of the lowest position of the first seat for the driver to ride on the second projection plane along the left-right direction is defined as a first reference point, the projection of the symmetric center point in the left-right direction of the handlebar on the second projection plane along the left-right direction is defined as a second reference point, and the projection of the symmetric center point in the left-right direction of the first foot pedal on the second projection plane along the left-right direction is defined as a third reference point; a distance in the front-back direction between the first reference point and the second reference point is greater than or equal to 568 mm and less than or equal to 695 mm; a distance between the first reference point and the third reference point is greater than or equal to 121 mm and less than or equal to 149 mm; a distance between the second reference point and the third reference point is greater than or equal to 446 mm and less than or equal to 546 mm; the motorcycle further comprises an instrument assembly comprising an instrument and an instrument bracket, the instrument extends substantially along a preset straight line; defining a preset plane perpendicular to the up-down direction of the motorcycle, and the angle between the preset straight line and the preset plane is greater than or equal to 0 degree and less than or equal to 60 degrees.

2. The motorcycle of claim 1, wherein a ratio of a length along the preset straight line direction of the instrument to a width along the left-right direction of the instrument is greater than or equal to 1.2 and less than or equal to 1.85.

3. The motorcycle of claim 1, wherein the ratio of the length along the preset straight line direction of the instrument to the width along the left-right direction of the instrument is greater than or equal to 1.35 and less than or equal to 1.70.

4. The motorcycle of claim 1, wherein the ratio of the length along the preset straight line direction of the instrument to the width along the left-right direction of the instrument is greater than or equal to 1.45 and less than or equal to 1.62.

5. The motorcycle of claim 1, wherein the angle between the preset straight line and the preset plane is greater than or equal to 10 degrees and less than or equal to 50 degrees.

6. The motorcycle of claim 5, wherein the angle between the preset straight line and the preset plane is greater than or equal to 20 degrees and less than or equal to 40 degrees.

7. The motorcycle of claim 1, wherein the instrument has a first projection on the preset plane, and the length in the front-back direction of the first projection is greater than or equal to the length in the left-right direction of the first projection.

8. The motorcycle of claim 1, wherein the motorcycle further comprises a buffer, and the buffer is disposed between the instrument and the instrument bracket.

9. The motorcycle of claim 8, wherein the buffer is substantially hollow cylindrical-shaped, the buffer comprises two end faces, at least one arc-shaped grooves are defined at each end face, the arc-shaped grooves are substantially symmetrical relative to a buffer axis.

10. The motorcycle of claim 8, wherein the central angle of the arc-shaped groove is greater than 0 degree and less than 180 degrees.

11. The motorcycle of claim 1, wherein the motorcycle further comprises a power supply, the power supply has a fourth projection on the preset plane, the fourth projection is at least partially within the second projection, and the fourth projection is in front of the third projection.

12. The motorcycle of claim 11, wherein the intelligent centralized control unit has a fifth projection on the preset plane, the fifth projection is within the first projection.

13. The motorcycle of claim 1, wherein the geometric center of the intelligent centralized control unit has a first center on the projection plane, projected along the up-down direction, and an axis of the second wheel has a second center on the projection plane along the up-down direction; a distance in the front-rear direction between the first center and the second center is defined as a D3, and the D3 is greater than or equal to 200 mm and less than or equal to 300 mm.

14. The motorcycle of claim 4, wherein an axis of the first wheel has a third center on the projection plane along the up-down direction, and a mid-point of the line connecting the second center and the third center is defined as a fourth center; the motorcycle has a total length L1 in the front-rear direction, , and a distance between the second center and the third center is defined as a D5; a ratio of the distance D3 between the first center and the second center to the distance D5 between the second center and the third center is greater than or equal to 0.13 and less than or equal to 0.21, and a ratio of the distance D3 between the first center and the second center to the total length L1 is greater than or equal to 0.09 and less than or equal to 0.14.

15. The motorcycle of claim 5, wherein a ratio of the distance D3 between the first center and the second center to the distance D5 between the second center and the third center is greater than or equal to 0.15 and less than or equal to 0.19, and a ratio of the distance D3 between the first center and the second center to the total length L1 is greater than or equal to 0.1 and less than or equal to 0.13.

16. The motorcycle of claim 4, wherein an axis of the first wheel has a third center on the projection plane along the up-down direction, and a mid-point of the line connecting the second center and the third center is defined as a fourth center; the motorcycle has a total length L1 in the front-rear direction, a distance between the first center and the fourth center is defined as a D4, and a distance between the second center and the third center is defined as a D5; a distance D4 between the first center and the fourth center is greater than or equal to 392 mm and less than or equal to 589 mm, a ratio of the distance D4 between the first center and the fourth center to the distance D5 between the second center and the third center is greater than or equal to 0.26 and less than or equal to 0.40, a ratio of the distance D4 between the first center and the fourth center to the total length L1 is greater than or equal to 0.18 and less than or equal to 0.28.

17. The motorcycle of claim 7, wherein the distance D4 between the first center and the fourth center is greater than or equal to 441 mm and less than or equal to 540 mm, the ratio of the distance D4 between the first center and the fourth center to the distance D5 between the second center and the third center is greater than or equal to 0.29 and less than or equal to 0.37, and the ratio of the distance D4 between the first center and the second center to the total length L1 is greater than or equal to 0.20 and less than or equal to 0.26.

18. The motorcycle of claim 1, wherein the intelligent centralized control unit comprises a signal transmission module, the intelligent centralized control unit is located at the top of the intelligent centralized control unit in the up-down direction, and the signal transmission surface in the signal transmission module is located upward.

19. The motorcycle of claim 1, wherein on a projection plane perpendicular to the up-down direction, the geometric center of the intelligent centralized control unit has a first center on the projection plane along the up-down direction, and an axis of the second wheel has a second center on the projection plane along the up-down direction; a distance between the first center and the second center in the front-rear direction is defined as a D3; an axis of the first wheel has a third center on the projection plane along the up-down direction, and the motorcycle has a total length L1 in the front-rear direction; a distance between the second center and the third center is defined as a D5; a ratio of the distance D3 between the first center and the second center to the distance D5 between the second center and the third center is greater than or equal to 0.13 and less than or equal to 0.21, and a ratio between the distance D3 between the first center and the second center and the total length L1 is greater than or equal to 0.09 and less than or equal to 0.14.

20. The motorcycle of claim 1, wherein the intelligent centralized control unit is located at the top of the sub-frame, and the intelligent centralized control unit is located below the first seat, the intelligent centralized control unit further comprises an elastic belt, the elastic belt is located above the intelligent centralized control unit and the elastic belt fixes the intelligent centralized control unit to the frame.

21. The motorcycle of claim 20, wherein one end of the elastic belt is connected to the frame, and the other end of the elastic belt is connected to the housing of the power supply.

22. The motorcycle of claim 20, wherein on a projection plane perpendicular to the up-down direction, in the left-right direction, the center of gravity of the intelligent centralized control unit has a first center on the projection plane, and an axial of the second wheel has a second center on the projection plane; a distance in the front-back direction between the first center and the second center is greater than or equal to 200 mm and less than or equal to 300 mm.

23. The motorcycle of claim 22, wherein in the front-rear direction, a ratio of the distance between the first center and the second center to the total length of the motorcycle is greater than or equal to 0.09 and less than or equal to 0.14.

24. The motorcycle of claim 20, wherein in the front-rear direction, a ratio of the distance between the first center and the second center to the distance between the second center and the third center is greater than or equal to 0.13 and less than or equal to 0.21.

25. The motorcycle of claim 1, wherein the frame comprises a main frame and a sub-frame, and the motorcycle further comprises a power supply, the power supply is positioned in the sub-frame, the power supply is positioned below the second seat; the sub-frame comprises a power limit member, with both ends of the power limit member connected to the sub-frame, and the power supply is fixed to the sub-frame by the power limit member.

26. The motorcycle of claim 25, wherein a power buffer is disposed on the side of the power limit member adjacent to the power supply; and a seat buffer is disposed on the side of the power limit member away from the power supply.

27. The motorcycle of claim 25, wherein the power limit member further comprises a seat limiting bracket, and at least a portion of the second seat is connected to the seat limiting bracket.

28. The motorcycle of claim 25, wherein the power limit member further comprises a pull strap fixing portion, the pull strap fixing portion is located on two sides of the power limit member in the left-right direction.

29. The motorcycle of claim 25, wherein the power limit member further comprises a flange structure, the flange structure is located at the front and rear of the power limit member in the front-rear direction, the flange structure extends substantially in the left-right direction.

30. The motorcycle of claim 25, wherein the second reference point is located in front of the first reference point, the third reference point is located in front of the first reference point, and the second reference point is located in front of the third reference point in the front-rear direction; the second reference point is located above the third reference point, the second reference point is located above the first reference point, and the first reference point is located above the third reference point in the up-down direction.

31. The motorcycle of claim 1, wherein the handlebar assembly comprises a mounting rack, extension portions, and hand-grip portions, the hand-grip portions are positioned on two sides of the mounting rack, and the extension portions are positioned between the mounting rack and the hand-grip portion, at least the mounting rack and the extension portions of the handlebar assembly are integrally formed.

32. The motorcycle of claim 1, wherein the mounting rack, the extension portions, and the hand-grip portions are integrally formed.

33. The motorcycle of claim 1, wherein one end of the extension portion is connected to the mounting rack, and the other end of the extension portion is connected to the hand-grip portion.

34. The motorcycle of claim 1, further comprising an upper bracket, and the mounting rack is connected to the upper bracket; the upper bracket comprises a shock absorber mounting portion for fixing the shock absorber, and an adjusting hole is defined on the extension portion; in the up-down direction, the shock absorber mounting portion has a first projection on the first plane, and the adjusting hole has a second projection on the first plane, at least a portion of the first projection area is positioned within the second projection; at least 50% of the first projection area is positioned within the second projection; the motorcycle further comprises a front shock absorber, the front shock absorber is connected to the shock absorber mounting portion, an adjusting portion is defined at a top of the front shock absorber; in the up-down direction, the adjusting portion has a third projection, and the third projection is positioned within the second projection.

35. The motorcycle of claim 1, wherein the hand-grip portion is positioned above the mounting rack in the up-down direction.

36. A motorcycle comprising
a frame extending substantially in a front-rear direction;
a drive assembly at least partially disposed in the frame;
a transmission assembly at least partially connected to the drive assembly;
a wheel system disposed under the frame and at least partially connected to the transmission assembly, the wheel system comprising a first wheel and a second wheel;
a vehicle cover comprising a first seat for a driver to ride on and at least partially connected to the frame;
a handlebar assembly at least partially connected to the frame, the handlebar assembly comprising a handlebar;
a foot pedal assembly comprising a first foot pedal for a driver to step;
wherein,
the motorcycle further comprises an instrument assembly comprising an instrument and an instrument bracket, the instrument extends substantially along a preset straight line; defining a preset plane perpendicular to the up-down direction of the motorcycle, and the angle between the preset straight line and the preset plane is greater than or equal to 0 degree and less than or equal to 60 degrees.

37. The motorcycle of claim 36, wherein on a second projection plane perpendicular to a left-right direction of the motorcycle, the projection of the lowest position of the first seat for the driver to ride on the second projection plane along the left-right direction is defined as a first reference point, the projection of the symmetric center point in the left-right direction of the handlebar on the second projection plane along the left-right direction is defined as a second reference point, and the projection of the symmetric center point in the left-right direction of the first foot pedal on the second projection plane along the left-right direction is defined as a third reference point; a distance in the front-back direction between the first reference point and the second reference point is greater than or equal to 568 mm and less than or equal to 695 mm; a distance between the first reference point and the third reference point is greater than or equal to 121 mm and less than or equal to 149 mm; a distance between the second reference point and the third reference point is greater than or equal to 446 mm and less than or equal to 546 mm.

38. The motorcycle of claim 36, wherein a ratio of a length along the preset straight line direction of the instrument to a width along the left-right direction of the instrument is greater than or equal to 1.2 and less than or equal to 1.85.

39. The motorcycle of claim 36, wherein the ratio of the length along the preset straight line direction of the instrument to the width along the left-right direction of the instrument is greater than or equal to 1.35 and less than or equal to 1.70.

40. The motorcycle of claim 36, wherein the ratio of the length along the preset straight line direction of the instrument to the width along the left-right direction of the instrument is greater than or equal to 1.45 and less than or equal to 1.62.

41. The motorcycle of claim 36, wherein the angle between the preset straight line and the preset plane is greater than or equal to 10 degrees and less than or equal to 50 degrees.

42. The motorcycle of claim 36, wherein the angle between the preset straight line and the preset plane is greater than or equal to 20 degrees and less than or equal to 40 degrees.

43. The motorcycle of claim 36, wherein in the up-down direction, the instrument has a first projection on the preset plane, and the length in the front-back direction of the first projection is greater than or equal to the length in the left-right direction of the first projection.

44. The motorcycle of claim 36, wherein the instrument assembly further comprises a buffer, and the buffer is disposed between the instrument and the instrument bracket.

45. The motorcycle of claim 44, wherein the buffer is substantially hollow cylindrical-shaped, the buffer comprises two end faces, at least one arc-shaped grooves are defined at each end face, the arc-shaped grooves are substantially symmetrical relative to a buffer axis.

46. The motorcycle of claim 44, wherein the central angle of the arc-shaped groove is greater than 0 degree and less than 180 degrees.

47. The motorcycle of claim 36, wherein the frame comprises a main frame and a sub-frame, the sub-frame comprises a first sub-frame and a second sub-frame, the front end of the first sub-frame is connected to the main frame, the front end of the second sub-frame is connected to the first sub-frame, the first sub-frame comprises a first mounting portion for connecting to the main frame, the first mounting portion extends substantially in the left-right direction, and the second sub-frame comprises a first protruding portion protruding outward from the frame in the left-right direction, a ratio of the width in the left-right direction of the first mounting portion to the width in the left-right direction of the first protruding portion is greater than or equal to 1.8 and less than or equal to 2.8.

48. The motorcycle of claim 47, wherein the ratio of the width in the left-right direction of the first mounting portion to the width in the left-right direction of the first protruding portion is greater than or equal to 2 and less than or equal to 2.6.

49. The motorcycle of claim 47, wherein the first sub-frame is made of a first material, and the second sub-frame is made of a second material.

50. The motorcycle of claim 47, wherein the first sub-frame is made of forging materials, and the second sub-frame is welded from pipe fittings.

51. The motorcycle of claim 47, wherein a distance between the first mounting portion and the first protruding portion in the front-rear direction of the motorcycle is greater than or equal to 304 mm and less than or equal to 456 mm.

52. The motorcycle of claim 47, wherein a width in the left-right direction of the first protrusion is greater than or equal to 299 mm and less than or equal to 449 mm.

53. The motorcycle of claim 47, wherein the width in the left-right direction of the first protrusion is greater than or equal to 336 mm and less than or equal to 412 mm.

54. The motorcycle of claim 47, wherein the first sub-frame and the main frame are connected by fasteners, and the first sub-frame and the second sub-frame are connected by welding.

55. The motorcycle of claim 47, wherein the first sub-frame comprises symmetric structural members in the front-rear direction, the structural member comprises a first member and a second member, the first member and the second member are connected together by welding; the thickness in the left-right direction of the structural member is greater than or equal to 10 mm and less than or equal to 16 mm.

56. The motorcycle according to claim 47, wherein the sub-frame comprises a first sub-frame, and the front end of the first sub-frame is connected to the main frame; the first sub-frame comprises two symmetric structural members in the front-rear direction, and the two structural members are distributed along the left-right direction, a thickness in the left-right direction of the structural members is greater than or equal to 10 mm and less than or equal to 16 mm.

57. The motorcycle of claim 55, wherein the thickness in the left-right direction of the structural members is greater than or equal to 11 mm and less than or equal to 15 mm.

58. The motorcycle of claim 55, wherein the front end of the second sub-frame is connected to the first sub-frame, and the second sub-frame is a pipe frame made of pipe fittings, a ratio of the thickness in the left-right direction of the structural member to the diameter of the pipe is greater than or equal to 0.48 and less than or equal to 0.72.

59. The motorcycle of claim 58, wherein a ratio of the thickness of the structural member to the diameter of the pipe is greater than or equal to 0.54 and less than or equal to 0.66.

60. The motorcycle of claim 36, wherein the handlebar assembly further comprises an upper bracket, the upper bracket includes a handlebar mounting portion, and the handlebar assembly is connected to the frame by means of the upper bracket; a handlebar mounting seat comprises a connection member that connects the handlebar mounting seat to the handlebar mounting portion; a buffering assembly is disposed on the outer side of the connection member, the buffering assembly sequentially comprises a first rigid component, an elastic component, and a second rigid component sleeved with each other, the first rigid component is sleeved on the outer side of the connection member.

61. The motorcycle of claim 60, wherein the first rigid component is a steel sleeve, the second rigid component is a steel sleeve, and the elastic component is a rubber lining.

62. The motorcycle of claim 60, wherein the connection member comprises a first end and a second end, the first end of the connection member is connected to the handlebar mounting seat, and the second end of the connection member extends through the handlebar mounting portion and is connected to the side of the upper bracket away from the handlebar mounting seat; a buffer ring is disposed between the handlebar mounting seat and the upper bracket; an anti-detachment member is disposed between the second end of the connection member and the upper bracket, and the outer diameter of the anti-detachment member is larger than the inner diameter of the handlebar mounting portion;
the outer diameter of the anti-detachment member is greater than the outer diameter of the buffering assembly; the inner diameter of the anti-detachment member is greater than the outer diameter of the connection member.

63. The motorcycle of claim 36, wherein the handlebar assembly comprises a mounting rack, extension portions, and hand-grip portions, the hand-grip portions are positioned on two sides of the mounting rack, and the extension portions are positioned between the mounting rack and the hand-grip portion, at least the mounting rack and the extension portions of the handlebar assembly are integrally formed.

64. The motorcycle of claim 63, wherein the mounting rack, the extension portions, and the hand-grip portions are integrally formed.

65. The motorcycle of claim 63, wherein one end of the extension portion is connected to the mounting rack, and the other end of the extension portion is connected to the hand-grip portion.

66. The motorcycle of claim 63, wherein an upper bracket, and the mounting rack is connected to the upper bracket; the upper bracket comprises a shock absorber mounting portion for fixing the shock absorber, and an adjusting hole is defined on the extension portion; in the up-down direction, the shock absorber mounting portion has a first projection on the first plane, and the adjusting hole has a second projection on the first plane, at least a portion of the first projection area is positioned within the second projection.

67. The motorcycle of claim 66, wherein at least 50% of the first projection area is positioned within the second projection.

68. The motorcycle of claim 66, wherein the motorcycle further comprises a front shock absorber, the front shock absorber is connected to the shock absorber mounting portion, an adjusting portion is defined at a top of the front shock absorber; in the up-down direction, the adjusting portion has a third projection, and the third projection is positioned within the second projection.

69. The motorcycle of claim 63, wherein the hand-grip portion is positioned above the mounting rack in the up-down direction.

70. The motorcycle of claim 63, wherein the extension portion inclines and extends outwardly.

71. The motorcycle of claim 36, wherein the motorcycle further comprises a fuel supply system, the fuel supply system is at least partially connected to the frame, the fuel supply system comprises a fuel tank and a fuel pump positioned in the fuel tank;
the fuel tank defines a fuel filler and a fuel-blocking structure, the fuel-blocking structure is positioned below the fuel filler, and a fuel discharge structure inclines downwardly from the rear to the front; on a projection plane perpendicular to the up-down direction, the angle between the fuel-blocking structure and the projection plane is greater than or equal to 1 degree and less than or equal to 10 degrees.

72. The motorcycle of claim 71, wherein in the up-down direction, the fuel filler has a first projection in the projection plane, and the fuel-blocking structure has a second projection in the projection plane, the second projection is located within the first projection, and the second projection has a smaller area than the first projection; the first projection is positioned in front of the second projection in the front-rear direction; the front end of the second projection is positioned behind the mid-line of the first projection in the front-rear direction; an overlapping area of the first projection and the second projection is less than or equal to half of the area of the first projection.

73. The motorcycle of claim 71, wherein in the up-down direction, the fuel filler has a first projection in the projection plane, and the fuel pump has a third projection in the projection plane, the third projection partially overlaps with the first projection; the first projection is positioned in front of the third projection.

74. The motorcycle of claim 71, wherein in the up-down direction, the fuel-blocking structure has a second projection on the projection plane, and the fuel pump has a third projection within the projection plane, where the second projection at least partially overlaps with the third projection; the second projection is positioned in front of the third projection.

75. The motorcycle of claim 71, wherein in the front-rear direction, the distance between the fuel pump and the front end of the fuel tank is less than or equal to the distance between the fuel pump and the rear end of the fuel tank.
